# EUROPÄISCHE PATENTSCHRIFT

(11) **EP 2 889 451 B1**
(45) Veröffentlichungstag und Bekanntmachung des Hinweises auf die Patenterteilung: **13.04.2016**
(21) Anmeldenummer: 14189310.7
(22) Anmeldetag: 17.10.2014
(51) Int. Cl.: F01D 5/18, B23P 15/04, F23R 3/00

(54) **Vorrichtung zur Kühlung einer Wandung eines Bauteils**
Device for cooling a wall of a component
Dispositif de refroidissement d'une paroi d'un composant

(30) Priorität: 18.10.2013 DE 102013221227
(43) Veröffentlichungstag der Anmeldung: 01.07.2015
(73) Patentinhaber: Rolls-Royce Deutschland Ltd & Co KG, 15827 Blankenfelde-Mahlow (DE)
(72) Erfinder: Pfitzner, Michael, 83627 Warngau (DE); Kröss, Bernhard, 85570 Markt Schwaben (DE); Schreivogel, Peter, 12103 Berlin (DE)
(74) Vertreter: Hoefer & Partner Patentanwälte mbB

(56) Entgegenhaltungen:
- EP-A2- 1 091 090
- DE-A1-102009 003 634
- US-A- 5 419 681
- US-A1- 2011 305 582

## Beschreibung

Die Erfindung bezieht sich auf eine Vorrichtung zur Kühlung einer Wandung eines Bauteils gemäß dem Oberbegriff des Anspruches 1.

Im Einzelnen bezieht sich die Erfindung auf eine Vorrichtung zur Kühlung einer Wandung, an welcher eine Fluidströmung strömt. Derartige Wandungen sind beispielsweise Brennkammerwände oder Oberflächen von Turbinenschaufeln einer Gasturbine.

Die erfindungsgemäße Vorrichtung weist zumindest einen Einströmkanal auf, durch welchen Kühlluft oder Kühlfluid zugeführt wird. Eine Mittelachse des Einströmkanals ist zu der Ebene der Wandung geneigt angeordnet. Dabei versteht es sich, dass die Wandung insgesamt nicht plan sein muss, sondern auch eine Konturierung oder Wölbung aufweisen kann. Der Begriff "Ebene der Wandung" ist deshalb so zu verstehen, dass er sich auf den Oberflächenbereich der Wandung angrenzend an den Ausströmbereich der Kühlfluidströmung bezieht.

Die durch den Einströmkanal aus seiner Mündungsöffnung austretende Strömung des Kühlfluids bzw. der Kühlluft wird entlang der Oberfläche der Wandung geführt und bewirkt eine Effusionskühlung.

Die Mündungsöffnung des Einströmkanals mündet in einer Nut, welche in der Wandung ausgebildet ist. Stromab der Mündungsöffnung weist eine Wandung der konturiert ausgebildeten Nut eine Anströmkante auf.

Eine Vorrichtung der beschriebenen Art ist aus der US 6,234,755 B1 vorbekannt. Die dort gezeigte Vorrichtung weist eine Nut auf, welche sich rechtwinklig zur Fluidströmung erstreckt. In die Nut, welche eine geradlinige, stromauf gelegene Rückwand aufweist, münden nebeneinander eine Vielzahl von Einströmkanälen, deren Mündungsbereiche jeweils diffusorartig erweitert sind. Hierdurch wird die eintretende Kühlluftströmung verlangsamt. Gegenüberliegend und somit stromab, bezogen auf Fluidströmung, weist die Nut eine Vielzahl von nebeneinander liegenden Anströmkanten auf. Diese teilen die aus den jeweiligen Mündungsöffnungen austretende Kühlluftströmung. Die Kühlluft wird somit in der Nut stark verlangsamt und strömt in nicht kontrollierter Weise auf die Wandung des zu kühlenden Bauteils. Dabei hebt sich der Kühlluftstrom im Bereich der Umlenkung und im Bereich seines Austritts aus der Nut zunächst von der Oberfläche der Wandung ab. Hierdurch wird eine starke Reduzierung der Kühlwirkung hervorgerufen. Weiterhin führt die Ausblasung der Kühlluft in die Nut zu einer starken Umlenkung der Kühlluft, so dass die Kühlluft weit in die Fluidströmung eindringt. Auch hierdurch wird die Kühlwirkung reduziert. Zusätzlich dringt bei der vorbekannten Lösung Heißgas aus der Fluidströmung in die Nut ein, insbesondere in Bereiche zwischen den Mündungsöffnungen der Einströmkanäle und führt ebenfalls zu einer Verringerung der Kühlwirkung.

Die US 6,383,602 B1 zeigt geneigt angeordnete Einströmkanäle, welche in einer Oberfläche einer Wandung münden und durch welche eine Effusionskühlluftströmung auf die Oberfläche der Wandung aufgelegt wird.

Die aus dem Stand der Technik bekannten Lösungen führen zu einem unkontrollierten Austritt der Kühlfluidströmung, so dass sich keine wirksame Effusionskühlung über die gesamte Oberfläche der Wandung des Bauteils ergibt.

US 2011/0305582 A1 zeigt eine filmgekühlte Wandung einer Gasturbine, bei welcher geneigte Einströmkanäle vorgesehen sind, welche in eine konturierte, in einer zu kühlenden Wandung ausgebildete Nut münden. Gegenüberliegend zu der Mündungsöffnung des jeweiligen Einströmkanals ist jeweils eine Anströmkante ausgebildet, welche senkrecht zur zu kühlenden Oberfläche ist. Seitlich der Anströmkante sind Wandungsbereiche vorgesehen, welche ebenfalls senkrecht zur Oberfläche ausgebildet sind.

Die DE 10 2009 003 634 A1 zeigt die Filmkühlung von Turbinenkomponenten, wobei mehrere Einströmkanäle mit Mündungsöffnungen in einer geradlinig verlaufenden Nut angeordnet sind. Stromab der jeweiligen Mündungsöffnung ist eine senkrecht zur zu kühlenden Oberfläche angeordnete Anströmkante ausgebildet, welche Teil eines keilförmigen Strömungsleitelements ist. Eine derartige Konstruktion zeigt auch die EP 1 091 090 A2.

Der Erfindung liegt die Aufgabe zu Grunde, eine Vorrichtung der eingangs genannten Art zu schaffen, welche bei einfachem Aufbau eine wirksame Effusionskühlung der Wandung eines Bauteils ermöglicht.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit vorgesehen, dass die Nut beidseitig der Mündungsöffnung und angrenzend an die Anströmkante in einem Winkel zur Richtung der heißen Fluidströmung verläuft und eine sich verengende Breite aufweist.

Durch die erfindungsgemäße Ausgestaltung erfolgt eine gleichmäßige Verteilung der aus den Einströmkanälen austretenden Kühlluftströme, ohne dass die Kühlluft bei ihrem Übergang zur Wandung des Bauteils abhebt. Durch die erfindungsgemäße Lösung sind selbst bei hohen Kühlluftmassenströmen stabile Strömungsverhältnisse gegeben, welche ein gleichmäßiges Auflegen der Effusionskühlschicht auf die Wandung des Bauteils sicherstellen. Durch die sich erfindungsgemäß ergebende verbesserte laterale Kühlluftverteilung wird ein stabiler zweidimensionaler Effusions-Kühlfilm generiert, der in direktem Kontakt zu der zu kühlenden Wandung des Bauteils strömt.

Die Erfindung ist insbesondere bei der Kühlung von thermisch hochbelasteten Bauteilen in Gasturbinen, insbesondere bei Brennkammerwänden und Turbinenschaufeln in Flugzeugtriebwerken einsetzbar. Dabei ergibt sich durch die Ausbildung einer aus der Nut austretenden stabilen Effusionskühlluftschicht eine zuverlässige und stabile Kühlung der Wandung des Bauteils. Hierdurch ist es mittels der erfindungsgemäßen Vorrichtung möglich, sowohl den Kühlluftbedarf als auch die Anzahl der benötigten Einströmkanäle zu minimieren.

Durch die erfindungsgemäß vorgesehene Ausgestaltung der Nut, welche beidseitig der Mündungsöffnung in einem Winkel zur Fluidströmung verläuft, erfolgt eine betriebssichere Führung der Kühlluft innerhalb der Nut. Es wird deshalb vermieden, dass Heißgas in die Nut eintritt. Weiterhin wird die durch die Mündungsöffnung des Einströmkanals austretende Kühlluft in ausreichendem Maße verlangsamt und geführt, so dass die Kühlluft gleichmäßig aus der Nut ausströmt und sich auf die Oberfläche der Wandung des Bauteils legt. Die Kühlluft wird somit durch die Nut geführt. Die sich verengende Breite der Nut kompensiert das stetig aus der Nut austretende Kühlluftvolumen, so dass die mittlere Strömungsgeschwindigkeit der Kühlluft längs der Nut im Wesentlichen konstant über die Länge der Nut ist. Hierdurch ergibt sich eine insgesamt verbesserte Kühlwirkung.

In günstiger Ausgestaltung der Erfindung ist vorgesehen, dass die Anströmkante rechtwinklig zur Oberfläche der Wandung angeordnet ist. Hierdurch erfolgt eine gleichmäßige Umlenkung und Aufteilung der aus dem Einströmkanal ausströmenden Kühlluftströmung.

In günstiger Ausgestaltung der Erfindung ist weiterhin vorgesehen, dass die Seitenwandungen der Nut ebenfalls rechtwinklig zur Oberfläche der Wandung angeordnet sind. Auch dies führt zu einem optimierten Strömungsverhalten der Kühlluft innerhalb der Nut. Hierzu kann auch beitragen, wenn die Nut in günstiger Weiterbildung der Erfindung eine gleichbleibende Tiefe aufweist. Es ist jedoch auch möglich, die Nut mit einer variablen Tiefe auszugestalten, welche beispielsweise von der Mündungsöffnung ausgehend abnimmt.

Der Einströmkanal weist erfindungsgemäß bevorzugterweise einen kreisförmigen Querschnitt auf, so dass sich hierbei eine elliptisch ausgebildete Mündungsöffnung ergibt. Durch den kreisförmigen Querschnitt und die geneigte Anordnung der Mittelachse des Einströmkanals erfolgt bereits eine strömungsoptimierte Einblasung der Kühlluft in die Nut.

Erfindungsgemäß ist vorgesehen, dass nebeneinander liegend mehrere Einströmkanäle ausgebildet sind, welche quer zur Richtung der Fluidströmung angeordnet sind. Die sich an die Mündungsöffnungen anschließenden seitlichen Nuten sind dabei jeweils mittels einer Verbindungsnut miteinander verbunden. Diese ist bevorzugterweise rechtwinklig zur Strömungsrichtung der Fluidströmung angeordnet, können jedoch auch in einem anderen Winkel ausgerichtet sein. Somit ergibt sich in der Draufsicht ein wellenförmiger oder zick-zack-förmiger Verlauf der Nut, welcher zu einer gleichmäßigen Führung der aus den Mündungsöffnungen austretenden Kühlluft beiträgt.

Erfindungsgemäß ist es möglich, die Ausgestaltung der Nut den jeweiligen Betriebsbedingungen anzupassen, um einen gleichmäßigen Kühlfilm mit erhöhter Kühleffektivität auszubilden. Somit kann, abhängig von den jeweiligen Betriebsbedingungen, eine Reduzierung des Kühlluftbedarfs und/oder eine Reduzierung der Zahl der Einströmkanäle erfolgen.

Im Folgenden wird die Erfindung anhand eines Ausführungsbeispiels in Verbindung mit der Zeichnung beschrieben. Dabei zeigt:
- Fig. 1: eine vereinfachte perspektivische Teilansicht einer erfindungsgemäßen Vorrichtung, und
- Fig. 2: eine Draufsicht auf das in Fig. 1 gezeigte Ausführungsbeispiel.

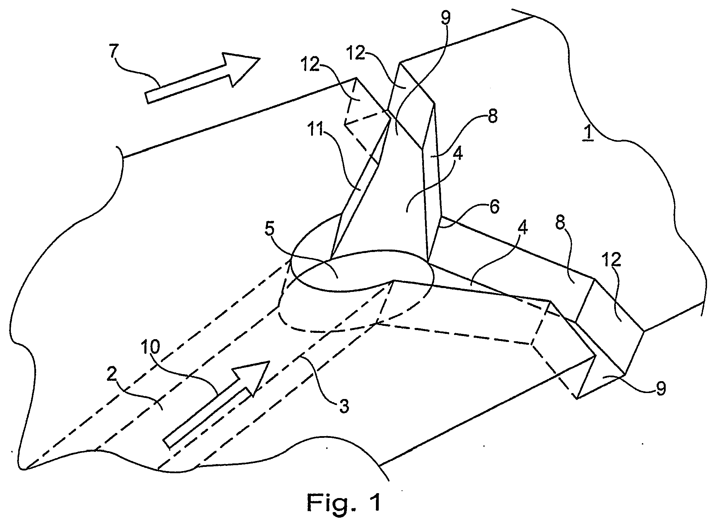

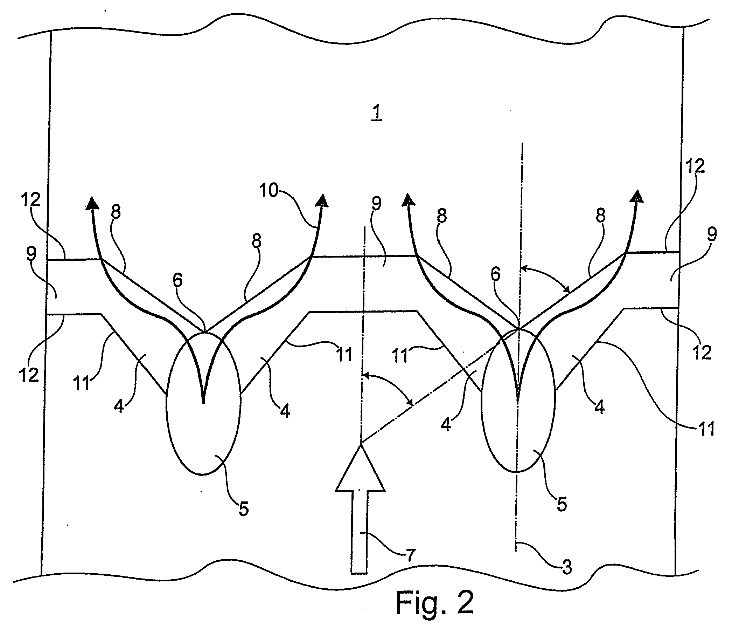

Die Figuren zeigen in schematischer, vereinfachter Darstellung eine Wandung 1 eines Bauteils. Die Wandung muss, wie erwähnt, nicht eben ausgebildet sein. Längs der Wandung strömt eine Fluidströmung 7, die beispielsweise als Heißgas ausgebildet ist. Das Bauteil ist beispielsweise ein Teil einer Brennkammerwand oder ein Teil einer Turbinenschaufel. In die Oberfläche der Wandung 1 münden mehrere Einströmkanäle 2, welche einen im Wesentlichen kreisförmigen Querschnitt (nicht gezeigt) aufweisen und deren Mittelachsen 3 jeweils zur Oberfläche der Wandung 1 geneigt angeordnet sind. Es ergeben sich somit elliptische Mündungsöffnungen 5, durch welche Kühlfluid (Kühlluft) 10 in eine Nut 4 strömt. Wie insbesondere aus Fig. 1 ersichtlich ist, ist stromab und gegenüberliegend der Mündungsöffnung 5 eine Anströmkante 6 ausgebildet. Die stromab angeordnete Seitenwandung 8 der Nut 4 ist somit konturiert und, auf die Mündungsöffnung 5 weisend, in der Draufsicht V-förmig ausgebildet, so wie dies insbesondere aus Fig. 2 ersichtlich ist. Es versteht sich, dass die beiden seitlich an die Mündungsöffnung 5 angrenzenden Nuten jeweils symmetrisch zur Mittelachse 3 des Einströmkanals 2 ausgebildet und angeordnet sind.

Die Nut 4 weist in ihrer Längsrichtung, ausgehend von der Mündungsöffnung 5, einen sich verengenden Querschnitt auf und geht in eine Verbindungsnut 9 über. Diese ist, wie aus Fig. 2 ersichtlich ist, im Wesentlichen rechtwinklig zur heißen Fluidströmung 7 angeordnet. Hierdurch ergibt sich ein wellenförmiger oder zick-zack-förmiger Verlauf der Gesamtnut, welche aus den einzelnen, seitlich der Mündungsöffnungen 5 beginnenden Nuten 4 und den jeweiligen Verbindungsnuten 9 zusammengesetzt ist.

Durch die laterale Verjüngung oder Reduzierung des Querschnitts der Nut 4 ergibt sich eine konstante mittlere Strömungsgeschwindigkeit längs der Nut 4. Die restliche, aus der Nut 4 austretende und in die Verbindungsnut 9 einströmende Kühlluft, wird ebenfalls in gleichmäßiger Weise auf die Oberfläche der Wandung 1 aufgelegt, so wie dies durch die Kühlfluidströmungen 10 gemäß Fig. 2 schematisch gezeigt ist.

Die Verbindungsnuten 9 weisen einen gleichbleibenden Querschnitt auf und sind, ebenso wie die Nuten 4, mit Seitenwandungen ausgebildet, welche rechtwinklig zur Oberfläche der Wandung 1 und damit zur Fluidströmung 7 orientiert sind.

Wie sich insbesondere aus Fig. 2 ergibt, sind die Nuten 4 jeweils in einem Winkel zur Richtung der Fluidströmung 7 bzw. zur Ausströmrichtung aus der Mündungsöffnung 5 angeordnet. Somit ergibt sich eine gleichmäßige laterale Verteilung der Kühlluft. Durch Anpassung der Querschnitte der Nuten 4 sowie der Verbindungsnuten 9 sowie durch Änderung der Winkel, in welchen die Nuten 4 verlaufen, kann erfindungsgemäß eine Optimierung und Anpassung an die jeweiligen bauteilbedingten Strömungsverhältnisse erfolgen.

Die Anströmkante 6 und die V-förmige oder dreieckige Ausgestaltung der Seitenwandungen der benachbarten Nuten 4 führen zu einer optimierten seitlichen Umlenkung der Strömung des Kühlfluids 10 und reduziert den Impuls des aus der Mündungsöffnung 5 austretenden Kühlluftstrahls, wodurch ein vertikales Eindringen in die Hauptströmung (Fluidströmung 7) verhindert oder vermindert wird. Durch die erfindungsgemäß vorgesehene schmale Ausgestaltung der Nuten 4 und der Verbindungsnuten 9 erfolgt eine vollständige Füllung mit Kühlfluid, wodurch eine Vermischung mit Heißgas aus der Fluidströmung 7, insbesondere im Bereich zwischen den Mündungsöffnungen 5, verhindert oder reduziert wird.

Erfindungsgemäß ist es möglich, die an die Anströmkante 6 angrenzenden Seitenwandungen 8, die Seitenwandungen 11 am stromauf liegenden Randbereich der Nuten 9 sowie die Seitenwandungen 12 der Verbindungsnut 9 nicht rechtwinklig, sondern in einem geneigten Winkel zur Oberfläche der Wandung 1 des Bauteils auszubilden. Erfindungsgemäß sind auch Unterschiede und Optimierungen der Querschnitte der Nuten 4 und der Verbindungsnuten 9 möglich.

Insbesondere aus der Darstellung der Fig. 2 ergibt sich ein wesentlicher Aspekt der vorliegenden Erfindung. Da die Nut 4 in einem Winkel zu der Verbindungsnut 9 angeordnet ist, ergibt sich beim Übergang der Seitenwandung 8 zur Seitenwandung 12 ein Knick. Ein analoger Knick liegt beim Übergang der Seitenwandung 11 in die Seitenwandung 12 vor. Dies ist insbesondere in der rechten und der linken Bildhälfte der Fig. 2 verdeutlicht. An diesen knickartigen Übergängen in die Verbindungsnut 9 wird die durch die sich verjüngende Nut 4 ausströmende fokussierte Luftströmung umgelenkt. Die Fokussierung bezeichnet die Beschleunigung der Luftströmung in der sich verjüngenden Nut 4. Die Luft wird so gezielt auf die Prallfläche (Seitenwandung 12) gelenkt. Diese Umlenkung fördert das Ausströmen der Fluidströmung aus der Nut. An der stromab gelegenen Seitenwandung oder Kante der Verbindungsnut 9 entsteht eine Prallwirkung, die die Strömung unter anderem nach oben und damit aus der Nut 4 lenkt. Über die Position des Übergangs (Knicks) von der Nut 4 in die Verbindungsnut 9 kann die laterale Verteilung der Kühlluft gesteuert werden.

### Bezugszeichenliste:

- 1: Wandung
- 2: Einströmkanal
- 3: Mittelachse
- 4: Nut
- 5: Mündungsöffnung
- 6: Anströmkante
- 7: Fluidströmung
- 8: Seitenwandung
- 9: Verbindungsnut
- 10: Kühlfluid
- 11, 12: Seitenwandung

## Patentansprüche

1. Vorrichtung zur Kühlung einer Wandung (1) eines Bauteils, wobei eine Fluidströmung (7) parallel zu der Wandung (1) strömt, mit zumindest einem Einströmkanal (2), dessen Mittelachse (3) zu der Ebene der Wandung (1) geneigt angeordnet ist, mit einer in der Wandung (1) ausgebildeten Nut (4), in welcher der Einströmkanal (2) mündet, wobei eine Wandung der Nut (4) stromab einer Mündungsöffnung (5) des Einströmkanals (2) konturiert ausgebildet ist und eine der Mündungsöffnung (5) zugewandte Anströmkante (6) aufweist, wobei die Nut (4) beidseitig der Mündungsöffnung (5) und angrenzend an die Anströmkante (6) in einem Winkel zur Richtung der Fluidströmung (7) verläuft und eine sich verengende Breite aufweist, wobei quer zur Richtung der Fluidströmung (7) nebeneinander mehrere Einströmkanäle (2) mit Mündungsöffnungen (5) angeordnet sind, **dadurch gekennzeichnet, dass** die jeweiligen Nuten (4) mittels einer Verbindungsnut (9) miteinander verbunden sind, welche rechtwinklig zur Strömungsrichtung der Fluidströmung (7) verläuft und einen gleichbleibenden Querschnitt aufweist.

2. Vorrichtung nach Anspruch 1, **dadurch gekennzeichnet, dass** die Anströmkante (6) rechtwinklig zur Oberfläche der Wandung (1) angeordnet ist.

3. Vorrichtung nach Anspruch 1 oder 2, **dadurch gekennzeichnet, dass** die Seitenwandungen der Nut (4) rechtwinklig zur Oberfläche der Wandung (1) ausgebildet sind.

4. Vorrichtung nach einem der Ansprüche 1 bis 3, **dadurch gekennzeichnet, dass** die Nut (4) eine gleichbleibende Tiefe aufweist.

5. Vorrichtung nach einem der Ansprüche 1 bis 4, **dadurch gekennzeichnet, dass** der Einströmkanal (2) einen kreisförmigen Querschnitt aufweist und/oder dass die Mündungsöffnung (5) elliptisch ausgebildet ist.

6. Vorrichtung nach einem der Ansprüche 1 bis 5, **dadurch gekennzeichnet, dass** das Bauteil eine Turbinenschaufel einer Gasturbine ist.

7. Vorrichtung nach einem der Ansprüche 1 bis 5, **dadurch gekennzeichnet, dass** das Bauteil eine Brennkammerwand einer Gasturbine ist.

## Claims

1. Device for cooling a wall (1) of a component, where a fluid flow (7) flows parallel to the wall (1), with at least one inflow duct (2), the center axis (3) of which being arranged inclined to the plane of the wall (1), with a groove (4) provided in the wall (1), into which issues the inflow duct (2), where a wall of the groove (4) is designed contoured downstream of a discharge opening (5) of the inflow duct (2) and has an inflow edge (6) facing the discharge opening (5), where the groove (4) extends on both sides of the discharge opening (5) and adjacent to the inflow edge (6) at an angle to the direction of the fluid flow (7) and has a narrowing width, where several inflow ducts (2) with discharge openings (5) are arranged next to one another and transverse to the direction of the fluid flow (7), **characterized in that** the respective grooves (4) are connected to one another by means of a connecting groove (9), which extends at right angles to the flow direction of the fluid flow (7) and has a constant cross-section.

2. Device in accordance with Claim 1, **characterized in that** the inflow edge (6) is arranged at right angles to the surface of the wall (1).

3. Device in accordance with Claim 1 or 2, **characterized in that** the side walls of the groove (4) are provided at right angles to the surface of the wall (1).

4. Device in accordance with one of the Claims 1 to 3, **characterized in that** the groove (4) has a constant depth.

5. Device in accordance with one of the Claims 1 to 4, **characterized in that** the inflow duct (2) has a circular cross-section and/ or that the discharge opening (5) is elliptically shaped.

6. Device in accordance with one of the Claims 1 to 5, **characterized in that** the component is a turbine blade of a gas turbine.

7. Device in accordance with one of the Claims 1 to 5, **characterized in that** the component is a combustion chamber wall of a gas turbine.

## Revendications

1. Dispositif destiné à refroidir une paroi (1) d'un composant, un flux de fluide (7) s'écoulant parallèlement à la paroi (1), ledit dispositif comprenant au moins un canal d'admission (2) dont l'axe médian (3) est incliné par rapport au plan de la paroi (1), une gorge (4) formée dans la paroi (1) et dans laquelle débouche le canal d'admission (2), sachant qu'une paroi de la gorge (4) est chantournée en aval d'une embouchure (5) du canal d'admission (2) et présente une arête d'afflux (6) orientée sur l'embouchure (5), que la gorge (4) s'étend des deux côtés de l'embouchure (5) et en jouxtant l'arête d'afflux (6) selon un angle par rapport à la direction du flux de fluide (7) et présente une largeur se rétrécissant, que transversalement à la direction du flux de fluide (7) sont disposés côte à côte plusieurs canaux d'admission (2) avec embouchures (5), **caractérisé en ce que** les gorges (4) respectives sont reliées entre elles par une gorge de liaison (9) qui s'étend perpendiculairement à la direction d'écoulement du flux de fluide (7) et présente une section transversale constante.

2. Dispositif selon la revendication n° 1, **caractérisé en ce que** l'arête d'afflux (6) est disposée perpendiculairement à la surface de la paroi (1).

3. Dispositif selon la revendication n° 1 ou n° 2, **caractérisé en ce que** les parois latérales de la gorge (4) sont formées perpendiculairement à la surface de la paroi (1).

4. Dispositif selon une des revendications n° 1 à n° 3, **caractérisé en ce que** la gorge (4) présente une profondeur constante.

5. Dispositif selon une des revendications n° 1 à n° 4, **caractérisé en ce que** le canal d'admission (2) présente une section transversale circulaire et/ ou que l'embouchure (5) a une forme elliptique.

6. Dispositif selon une des revendications n° 1 à n° 5, **caractérisé en ce que** le composant est une aube de turbine d'une turbine à gaz.

7. Dispositif selon une des revendications n° 1 à n° 5, **caractérisé en ce que** le composant est une paroi de chambre de combustion d'une turbine à gaz.
